# EUROPEAN PATENT SPECIFICATION

(11) **EP 4 006 732 B1**
(45) Date of publication and mention of the grant of the patent: **09.10.2024**
(21) Application number: 21195999.4
(22) Date of filing: 10.09.2021
(51) Int. Cl.: G06F 11/36, G06F 8/71, G06F 8/75

(54) **METHODS AND APPARATUS FOR SELF-SUPERVISED SOFTWARE DEFECT DETECTION**
VERFAHREN UND VORRICHTUNG ZUR SELBSTÜBERWACHTEN SOFTWARE-FEHLERERKENNUNG
PROCÉDÉS ET APPAREIL DE DÉTECTION DE DÉFAUTS LOGICIELS AUTOSUPERVISÉE

(30) Priority: 30.11.2020 US 202017107542
(43) Date of publication of application: 01.06.2022
(73) Proprietor: INTEL Corporation, Santa Clara, CA 95054 (US)
(72) Inventor: Gottschlich, Justin, Santa Clara, 95054 (US)
(74) Representative: Goddar, Heinz J.

(56) References cited:
- US-A1- 2018 276 105
- US-A1- 2018 276 562
- US-A1- 2018 300 227
- US-B2- 10 459 695

## Description

### FIELD OF THE DISCLOSURE

This disclosure relates generally to software debugging, and, more particularly, to methods and apparatus for self-supervised software defect detection.

### BACKGROUND

Programmers strive to write software (e.g., code) that is free from defects. However, programmers can often make simple, sometimes typographic, mistakes. Correction of such mistakes might consume an inordinate amount of time and/or resources to identify and/or correct.

US 10 459 695 B2 relates to detecting and correcting errors in software, such as in source code, using machine learning.

US 2018/300227 A1 relates to a computer-implemented method of detecting a likely software malfunction.

US 2018/276105 A1 relates to providing an active learning source code review framework.

US 2018/276562 A1 relates to a machine learning model being trained to infer the probability of the presence of categories of a software bug in a source code file.

### SUMMARY OF THE INVENTION

The invention is defined in the independent claims. Advantageous modifications are set forth in the dependent claims.

### BRIEF DESCRIPTION OF THE DRAWINGS

FIG. 1 is a sample set of instructions that includes an unintended defect.
FIG. 2 is an alternative sample set of instructions that is free of the unintended defect of FIG. 1.
FIG. 3 is a schematic illustration of an example system constructed in accordance with teachings of this disclosure to facilitate self-supervised software defect detection.
FIG. 4 is a flowchart representative of example machine readable instructions which may be executed to implement the example defect
   detector of FIG. 3 to initialize and learn control structures for a programming language.
FIG. 5 is a flowchart representative of example machine readable instructions which may be executed to implement the example defect detector of FIG. 3 to identify and generate clusters per control structure type.
FIG. 6 is a flowchart representative of example machine readable instructions which may be executed to implement the example defect detector of FIG. 3 to rank code snippets as a "golden" snippet.
FIG. 7 is a flowchart representative of example machine readable instructions which may be executed to implement the example defect detector of FIG. 3 to identify a software defect.
FIG. 8 is a block diagram of an example processor platform structured to execute the instructions of FIGS. 4, 5, 6, and/or 7 to implement the example defect detector of FIG. 3.
FIG. 9 is a block diagram of an example software distribution platform to distribute software (e.g., software corresponding to the example computer readable instructions of FIGS. 4, 5, 6, and/or 7) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).

The figures are not to scale. In general, the same reference numbers will be used throughout the drawing(s) and accompanying written description to refer to the same or like parts. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein "substantially real time" refers to occurrence in a near instantaneous manner recognizing there may be real world delays for computing time, transmission, etc. Thus, unless otherwise specified, "substantially real time" refers to real time +/- 1 second.

### DETAILED DESCRIPTION

Programmers strive to write software (e.g., computer executable instructions, scripts, code, etc.) that is free from defects. Unfortunately, human programmers are prone to making mistakes, sometimes known as bugs, in their software. Such errors can cause operational error in the software and require the programmer to "debug" the software to find and correct the problem. In some examples, such mistakes might not be immediately apparent, and might only be discovered after identifying that the software does not function in an expected manner. This may not occur until the software is widely distributed to end users and can cause significant technical and/or commercial problems.

Approximately half of all software development time is spent debugging code. Therefore, even the smallest fraction of automation in the space of debugging could result in a notable time savings and improve programmer productivity globally. Examples disclosed herein can be used to automatically detect potential defects in control structures (e.g., conditional execution streams using "if' statements, looping execution streams using "for" and "while" loops, etc.) using machine learning. Moreover, the detection of such defects can be reinforced using human feedback to improve the machine learning process.

As noted above, roughly half of all software development time is in the space of debugging. Debugging is defined broadly herein as any activity related to identifying, tracking, root causing, and/or fixing of software bugs (e.g., errors). One specific class of bugs are those associated with control structures, such as if statements.

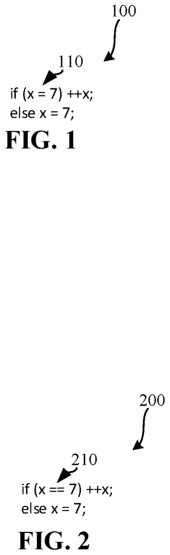

FIG. 1 illustrates a sample set of instructions 100 that includes an unintended defect. FIG. 2 illustrates an alternative sample set of instructions 200 that is free of the unintended defect of FIG. 1. The example instructions of FIGS. 1 and 2 are presented in the programming language C++. However, it should be understood that any other programming language that uses control structures might additionally or alternatively be used.

In the example set of instructions 100 of FIG. 1, it is the programmer's intention to set the variable 'x' equal to 7 if 'x' is not already that value upon evaluation. Otherwise, 'x' should be set to 8 by way of the increment function (e.g., ++x;). Stated differently, if 'x' is equal to 7, then increment 'x', otherwise set 'x' to 7. Unfortunately, due to a one character syntax error identified by arrow 110, this code always sets 'x' to the value of 8. This is because the programmer had accidentally omitted a second '=' sign in the conditional if statement. The omission of this '=' transforms this operation from being a control structure condition equality evaluation (i.e., "if (x == 7)"), to an assignment operation which always returns true after the assignment is performed (i.e., "x = 7"), thereby causing execution of the '++x" instruction.

In the illustrated example of FIG. 2, the conditional statement 210 uses a double equals '==' to specify the condition equality evaluation. An aspect of this example programming scenario that can make this type of bug particularly challenging is that the assignment of variables within conditionals is considered proper syntax in C/C++. In other words, the code "if (x = 7)" is syntactically correct, despite not being what the programmer had intended. As such, a compiler will not identify this as a syntax error to bring the programmers attention to the error. Moreover, the instructions of FIG. 1 is a programming behavior that is seldom used. For example, use of the syntax 'if (x=7)' is typically considered a typographical error that consists of a single mistyped character. For these reasons, bugs of this kind can be some of the most notoriously difficult ones for humans to identify through manual and/or visual inspection.

Example approaches disclosed herein utilize a self-supervised learning system to learn the appropriate control structure signatures for a given programming language across a given training repository of code. Using a trained model, example approaches disclosed herein enable identification of potential software defects for presentation to a programmer. Such defects correspond to situations in which the software does not, for example, follow traditional syntax for a given control structure. The presentation of such non-traditional syntax identifications enables the programmer to more easily debug software. Using the non-traditional syntax identifications, the programmer may provide reinforcement learning by, for example, identifying the non-traditional syntax as a bug (or not). Such reinforcement learning can be used to refine the model and improve accuracy over time.

Example approaches disclosed herein do not rely upon labeled training data. Thus, programmers are not required to explicitly identify whether code is buggy or not. In this manner, many general programming language control structure patterns can be quickly learned for a given programming language. Once those patterns are learned, example approaches disclosed herein can identify, with varying degrees of confidence, potential bugs due to deviations from the learned patterns. Reinforcement learning (e.g., continual improvement of the learned information) may be used to, for example, increase or decrease the confidence level for potential defects, which can result in a dynamically improved system in identifying defects. Example approaches are programming language agnostic, meaning that theoretical underpinnings of the approaches disclosed herein are applicable to any programming language and/or script that can exhibit defects in control structures.

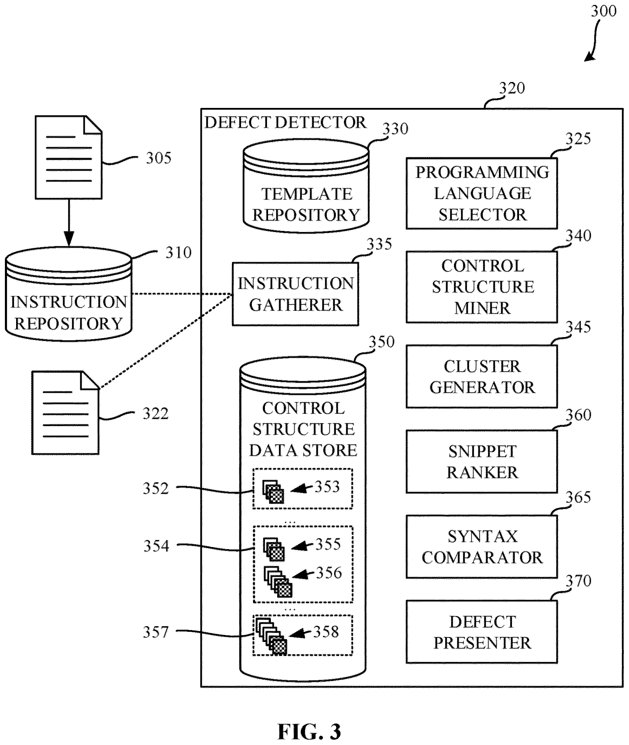

FIG. 3 is a schematic illustration of an example system 300 constructed in accordance with teachings of this disclosure to facilitate self-supervised software defect detection. The example system 300 of FIG. 3 operates upon instructions used for training 305 that are stored in an instruction repository 310. More specifically, the instructions 30 are analyzed by a defect detector 320 to enable later analysis of instructions to be debugged 322. The defect detector 320, when reviewing the instructions 322, attempts to identify potential defects (e.g., bugs) in the instructions 322.

The example instructions 305 may represent any type of instructions including, for example, source code written in one or more programming languages. In examples disclosed herein, the instructions 305 are written in a language that includes control structures. As used herein, a control structure is any instruction or set of instructions that control how a program is to be executed. Different control structures may exist and/or may appear differently in the context of different programming languages. The instructions 305 represent previously written code that functions as intended. In other words, the instructions 305 are generally bug-free.

The example instruction repository 310 of the illustrated example of FIG. 3 is implemented by any type of storage device (e.g., any type of memory and/or storage disc for storing data such as, for example, flash memory, magnetic media, optical media, solid state memory, hard drive(s), thumb drive(s), etc. Furthermore, the data stored in the example instruction repository 310 may be in any data format such as, for example, binary data, comma delimited data, tab delimited data, structured query language (SQL) structures, etc. While, in the illustrated example, the instruction repository 310 is illustrated as a single device, the example instruction repository 310 and/or any other data storage device(s) described herein may be implemented by any number and/or type(s) of devices (e.g., memories). In the illustrated example of FIG. 3, the example instruction repository 310 stores the instructions 305. The example instruction repository 310 may be implemented by, for example, a public instruction repository such as, for example, a repository hosted by GitHub, Inc. In some examples, the instruction repository 310 is additionally or alternatively implemented as a private instruction repository.

The example instructions 322 shown in FIG. 3 represent instructions to be analyzed by the defect detector 320 for defect detection. In this manner, the instructions 322 may be stored in any storage device at any location accessible by the defect detector 320 including, for example, a local hard disk drive, local memory, a remote instruction repository (e.g., the instruction repository 310), etc.

The example defect detector 320 of the illustrated example of FIG. 3 includes programming language selector 325, a template repository 330, an instruction gatherer 335, a control structure miner 340, a cluster generator 345, a control structure data store 350, a snippet ranker 360, a syntax comparator 365, and a defect presenter 370. In operation, the example defect detector 320 analyzes instructions stored in the instruction repository 310 to learn common syntaxes used in a given programming language. The defect detector 320 uses the learned common syntaxes to attempt to detect defects in the instructions 322.

The example programming language selector 325 of the illustrated example of FIG. 3 identifies a programming language of the instructions to be analyzed (e.g., either from the instruction repository 310 or the instructions to be analyzed for defects 322). In examples disclosed herein, the programming language is identified based on a file extension associated with the instructions. For example, an instruction file having an extension of ".cpp" may be identified using the C++ programming language. However, other approaches for identifying a programming language may additionally or alternatively be used such as, for example, automatically analyzing the syntactic structures of the instructions.

Such an identification of the programming language performed by the programming language selector 325 is useful as, for example, different programming language(s) can have slightly varied, but similar, syntax. What may be a bug (e.g., resulting in unintended functionality) if written in one programming language, may result in intended functionality if written in another language.

The example template repository 330 of the illustrated example of FIG. 3 is implemented by any storage device (e.g., memory, structure, and/or storage disc for storing data such as, for example, flash memory, magnetic media, optical media, solid state memory, hard drive(s), thumb drive(s), etc). Furthermore, the data stored in the example template repository 330 may be in any data format such as, for example, binary data, comma delimited data, tab delimited data, structured query language (SQL) structures, etc. While, in the illustrated example, the template repository 330 is illustrated as a single device, the example template repository 330 and/or any other data storage devices described herein may be implemented by any number and/or type(s) of memories.

In the illustrated example of FIG. 3, the example template repository 330 stores skeletal structures of known control structures for a given programming language. In some examples, the template repository 330 is populated with known control structures by manual input. For example, a programmer may provide skeletal structures of control structures used in the programming language (e.g., if statements, where statements, for each statements, do until statements, etc.). In some alternative examples, the identification of the skeletal structures may be identified by an automated extraction process. In some examples, multiple template repositories may be used corresponding to different programming languages. In some other examples, a single template repository may be used, and may include additional identifiers to accommodate identification of the programming language to which a skeletal structure corresponds.

The example instruction gatherer 335 of the illustrated example of FIG. 3 access instructions stored in the instruction repository 310 and/or other instructions (e.g., the instructions 322). In examples disclosed herein, the instruction repository 310 is accessed based on user-provided configuration information including, for example, a uniform resource locator (URL) and/or uniform resource indicator (URI) for the resource, a username, a password, etc. The instruction gatherer 335 accesses the instruction repository 310 to, for example, enable the defect detector 320 to learn common syntaxes used in the instruction repository. Such common syntaxes can later be used by the defect detector 320 to analyze the instructions 322 to attempt to detect a defect.

When attempting to detect the defect, the example instruction gatherer 335 identifies an instruction to be analyzed (e.g., the instruction to be analyzed 322). In some examples, the instruction gatherer 335 (and/or more generally, the example defect detector 320) may be implemented as a part of an integrated development environment (IDE), such that code analysis is performed on the fly (e.g., while a programmer is writing code). In such an example, the code analysis may be triggered by, for example, saving of the software (e.g., the instructions to be analyzed 322), a threshold amount of time elapsing from a prior analysis, entry of an instruction to compile the software (e.g., the instructions to be analyzed 322), an instruction from the programmer to perform the analysis, etc. Alternatively, the instruction gatherer 335 may be implemented as part of a cloud solution that, for example, periodically scans a repository to identify potential bugs.

The example control structure miner 340 of the illustrated example of FIG. 3 mines the instruction repository 310 to identify control structures. The example control structure miner 340 identifies a control structure based on information stored in the template repository 330. The example control structure miner 340 inserts information into the control structure data store 350 representative of control structures identified in the instruction repository 310. The inserted information includes control structure instances, referred to as a code snippet. In some examples, the code snippet may include surrounding closures (e.g., brackets and/or other syntax related to the control structure).

The example cluster generator 345 of the illustrated example of FIG. 3 analyzes the control structure data store 350 to assign each code snippet identified by the control structure miner 340 to a particular control structure type, thereby separating code snippets by the type of control structure that they represent. Once all control structure instances are type-assigned (i.e., placed in their appropriate buckets), the example cluster generator 345 performs a pairwise code similarity analysis for each code pair that exists in each bucket. For example, if a given bucket of control structures included four code snippets, the example cluster generator 345 would perform the code similarity analysis on the following pairs: <1, 2>, <1, 3>, <1, 4>, <2, 3>, <2, 4>, <3, 4>. Using the similarity scores, the example cluster generator 345 generates clusters within each control structure type.

The example control structure data store 350 of the illustrated example of FIG. 3 is implemented by any storage device (e.g., memory, structure, and/or storage disc for storing data such as, for example, flash memory, magnetic media, optical media, solid state memory, hard drive(s), thumb drive(s), etc). Furthermore, the data stored in the example control structure data store 350 may be in any data format such as, for example, binary data, comma delimited data, tab delimited data, structured query language (SQL) structures, etc. While, in the illustrated example, the control structure data store 350 is illustrated as a single device, the example control structure data store 350 and/or any other data storage devices described herein may be implemented by any number and/or type(s) of memories. In the illustrated example of FIG. 3, the example control structure data store 350 stores code snippets and additional information concerning those code snippets including, for example, a type of the control structure represented by the code snippet, a cluster identifier of the code snippet, and an indication of whether the code snippet is a "golden" snippet.

As shown in the illustrated example of FIG. 3, the control structure data store 350 includes three types of control structures 352, 354, 357. In the illustrated example of FIG. 3, the first control structure type 352 includes a first cluster 353 having three code snippets, two of which are labeled as "golden" snippets (represented by the shading of the blocks representing the code snippets). The second control structure type 354 includes two clusters: a second cluster 355 and a third cluster 356. The second example cluster 355 includes three code snippets, two of which are labeled as "golden" snippets. The third example cluster 356 includes four code snippets, two of which are labeled as "golden" snippets. The third control structure type 357 includes a fourth cluster 358. The fourth example cluster 358 includes six code snippets, two of which are labeled as "golden" snippets.

While three control structure types are shown in the illustrated example of FIG. 3, any number of control structure types may additionally or alternatively be used. Moreover, any number of clusters may be used within each of the example control structure types 352, 354, 357. Furthermore, any number of code snippets may be labeled as "golden" snippets within each of those clusters. For example, while in the illustrated example of FIG. 3, two snippets are labeled as "golden" within each of the clusters, in some examples, different numbers of clusters may be labeled as "golden" within some or all of the clusters.

In the illustrated example of FIG. 3, a single programming language is represented by the code snippets (grouped into clusters and/or control structure types). In some examples, to accommodate separate programming languages, separate control structure data stores are used. However, in some other examples, a single control structure data store is used, and may additionally include information identifying the programming language of each of the code snippets, to allow for programming language based analysis to be performed.

The example snippet ranker 360 of the illustrated example of FIG. 3 performs a ranking analysis to identify one or more "golden" snippets. As used herein, a "golden" snippet (which may also be referred to as a reference snippet, a clean snippet, a bug-free snippet, etc.) is a code snippet that has been identified as being bug-free. Such identification may be the result of an automated analysis and/or a manual identification of a code snippet being bug-free. Conversely, a snippet that is not referred to as a "golden" snippet may represent bug-free code (e.g., has not yet been identified as being bug-free) or alternatively, may include a bug. The code snippets are then stored in the control structure database 350 the by the snippet ranker 360 along with the identification of whether the snippet is considered a "golden" snippet. As a result of the analysis, other software 322 can later be analyzed to identify deviations from those "golden" snippets, which may be represent potential bugs.

The example syntax comparator 365 of the illustrated example of FIG. 3 analyzes syntax of control structures that may include a defect and one or more "golden" snippets, to determine a level of similarity. In examples disclosed herein, the similarity is determined by using a precise syntax code similarity mechanism, such as, for example, an abstract syntax tree. Such an analysis enables the example syntax comparator 365 to identify minor syntax deviations in a generally semantically similar grouping that may be the source of a bug. In examples disclosed herein, the similarity analysis performed by the syntax comparator 365 results in creation of a score representing a degree of similarity between the control structure to analyze and the golden snippet. In some examples, the score may identify the similarity with a score from zero (no similarity) to one (perfect similarity). However, any other approach to identifying a level of similarity may additionally or alternatively be used.

Using the similarity score, the example syntax comparator 365 determines whether there is a minor syntax deviation from the golden snippet to the control structure to be analyzed. A minor deviation can be detected when, for example, the similarity score meets or exceeds a lower threshold (e.g., .7, or 70% similarity), and does not meet or exceed an upper threshold (e.g., .99, or 99% similarity). Using the upper threshold ensures code snippets will be flagged as buggy when they do not perfectly match the golden snippet (e.g., indicating a potential bug). Using the lower threshold ensures that code snippets will not be flagged as buggy when there is no correspondence to the golden snippet. Of course, any other similarity threshold values may additionally or alternatively be used. Adjusting the similarity threshold values may serve to, for example, reduce false positive and/or false negative identifications of potentially buggy instructions.

In response to the syntax comparator 365 detecting the minor syntax deviation, the example defect presenter 370 of the illustrated example of FIG. 3, flags the control structure as potentially buggy. The defect presenter 370 presents the potentially buggy control structure to the programmer (e.g., a user), to enable the programmer to address the potentially buggy code. The defect presenter may present the identification of the potentially buggy code in different manners based on, for example, whether the defect detector 320 is implemented in, for example, an integrated development environment (IDE), a cloud repository analysis server, etc. In some examples, the defect presenter 370 causes presentation of a pop-up message and/or other alert to the programmer to identify the potential defect. In other examples, the defect presenter 370 may cause a message (e.g., an email message) to be communicated to the programmer to identify the defect. In some examples, a suggested correction may be proposed based on the identified golden snippet, to remediate the defect.

The programmer may, in response to the identification of the potential defect, select a correction to be applied to the buggy control structure (e.g., the correction based on the "golden" snippet). In such an example, the correction may be applied to the buggy control structure by the instruction gatherer 335 via the defect presenter 370 and/or the interface whose presentation was caused by the defect presenter 370. Alternatively, the programmer may indicate that the control structure is not buggy (e.g., that a false identification of a defect has occurred).

While an example manner of implementing the defect detector 320 is illustrated in FIG. 3, one or more of the elements, processes and/or devices illustrated in FIG. 3 may be combined, divided, re-arranged, omitted, eliminated and/or implemented in any other way. Further, the programming language selector 325, the example instruction gatherer 335, the example control structure miner 340, the example cluster generator 345, the example snippet ranker 360, the example syntax comparator 365, the example defect presenter 370, and/or, more generally, the example defect detector 320 of FIG. 3 may be implemented by hardware, software, firmware and/or any combination of hardware, software and/or firmware. Thus, for example, any of the example instruction gatherer 335, the example control structure miner 340, the example cluster generator 345, the example snippet ranker 360, the example syntax comparator 365, the example defect presenter 370, and/or, more generally, the example defect detector 320 of FIG. 3 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example instruction gatherer 335, the example control structure miner 340, the example cluster generator 345, the example snippet ranker 360, the example syntax comparator 365, the example defect presenter 370, and/or, more generally, the example defect detector 320 of FIG. 3 is/are hereby expressly defined to include a non-transitory computer readable storage device or storage disk such as a memory, a digital versatile disk (DVD), a compact disk (CD), a Blu-ray disk, etc. including the software and/or firmware. Further still, the example defect detector 320 of FIG. 3 may include one or more elements, processes and/or devices in addition to, or instead of, those illustrated in FIG. 3, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

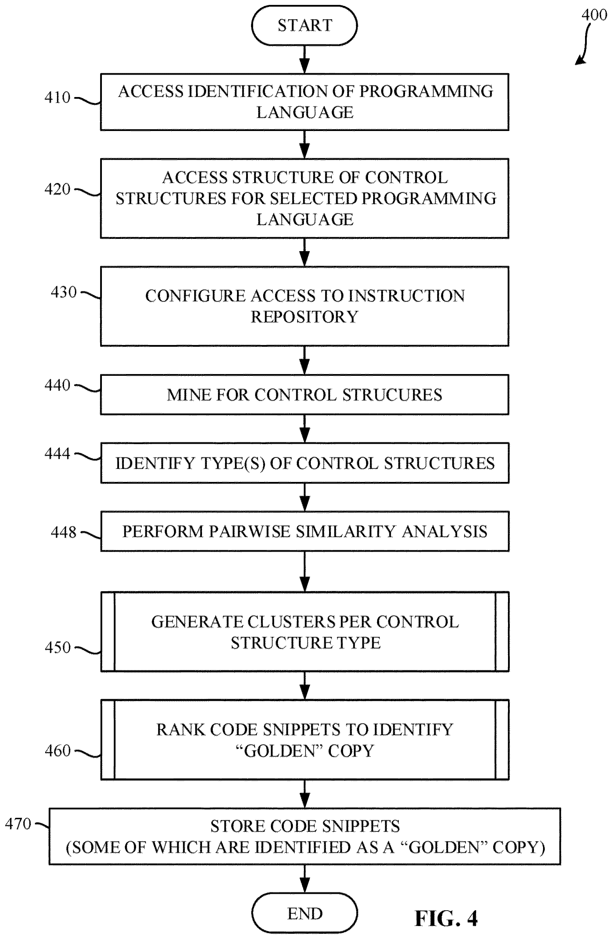

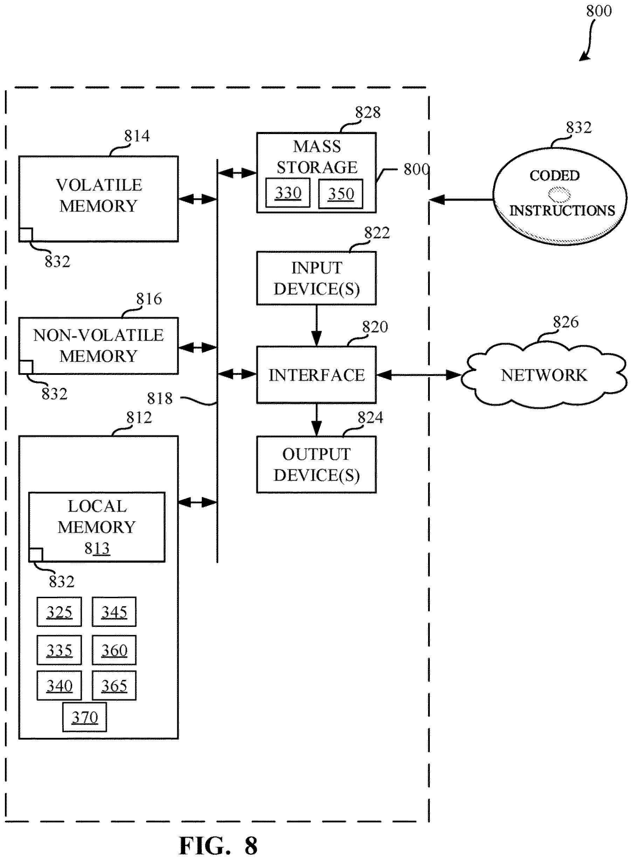

Flowcharts representative of example hardware logic, machine readable instructions, hardware implemented state machines, and/or any combination thereof for implementing the defect detector 320 of FIG. 3 are shown in FIGS. 4, 5, 6, and/or 7. The machine readable instructions may be one or more executable programs or portion(s) of an executable program for execution by a computer processor and/or processor circuitry, such as the processor 812 shown in the example processor platform 800 discussed below in connection with FIG. 8. The program may be embodied in software stored on a non-transitory computer readable storage medium such as a CD-ROM, a floppy disk, a hard drive, a DVD, a Blu-ray disk, or a memory associated with the processor 812, but the entire program and/or parts thereof could alternatively be executed by a device other than the processor 812 and/or embodied in firmware or dedicated hardware. Further, although the example program is described with reference to the flowchart illustrated in FIG. 4, 5, 6, and/or 7, many other methods of implementing the example defect detector 320 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 4, 5, 6, and/or 7 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 4 is a flowchart representative of example machine readable instructions 400 which may be executed to implement the example defect detector of FIG. 3. In particular, the instructions of FIG. 4 enable the defect detector to initialize and learn control structures for a programming language. The example machine readable instructions 400 begin execution when the example programming language selector 325 accesses an identification of a selected programming language. (Block 410). In examples disclosed herein, a single model (e.g., control structure data store 350) is used for each different programming language. However, in some examples, multiple programming languages may be accounted for in a single model. In some examples, the programming language may be used as an input to, for example, allow for selection of sub-components of the control structure data store 350 specific to the specific programming language.

The example control structure miner 340 accesses a skeletal structure of known control structures for the selected programming language. (Block 420). In examples disclosed herein, the skeletal structures of the known control structures are stored in the example template repository 330. In some examples, the template repository 330 is populated with known control structures by manual input. For example, a programmer may provide skeletal structures of control structures used in the programming language (e.g., if statements, where statements, for each statements, do until statements, etc.). In some alternative examples, the identification of the skeletal structures may be identified by an automated extraction process.

The example instruction accessor 335 then configures access to the instruction repository 310. (Block 430). In examples disclosed herein, the repository is accessed based on user-provided configuration information including, for example, a uniform resource locator (URL) and/or uniform resource indicator (URI) for the resource, a username, a password, etc.

The example control structure miner 340 mines the instruction repository and inserts information into the control structure data store 350. (Block 440). The inserted information includes control structure instances, referred to as a code snippet. In some examples, the code snippet may include surrounding closures (e.g., brackets and/or other syntax related to the control structure). The example cluster generator 345 analyzes the control structure data store 350 to assign each code snippet a particular control structure type, thereby separating code snippets by the type of control structure that they represent. (Block 444).

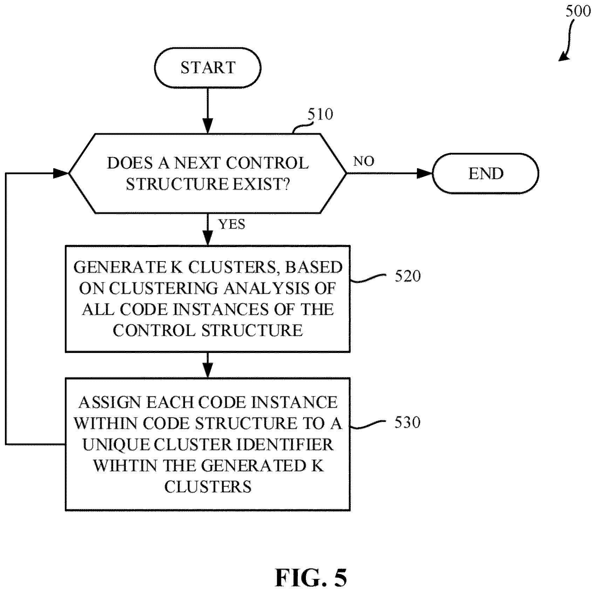

Once all control structure instances are type-assigned (i.e., placed in their appropriate buckets), the example cluster generator 345 performs a pairwise code similarity analysis for each code pair that exists in each bucket. (Block 448). For example, if a given bucket of control structures included four code snippets, the example cluster generator 345 would perform the code similarity analysis on the following pairs: <1, 2>, <1, 3>, <1, 4>, <2, 3>, <2, 4>, <3, 4>. Using the similarity scores, the example cluster generator 345 generates clusters within each control structure type. (Block 450). An example approach to generating clusters within each control structure type is described in further detail in connection with FIG. 5, below.

Depending on the size of code corpus used, the example clustering may result in multiple semantic grouping clusters for each bucket. For example, there may be 3 different semantic variants (e.g., groups) for "for" loops: (i) one where iterators are used, (ii) one where zero-based integers are set to some minimum and iterate until some max value is reached, using a monotonically increasing mechanism, and (iii) one where zero-based integers are set to a maximum and iterate until some minimum is reached, using a monotonically decreasing mechanism. Any number of semantic grouping clusters may be identified for a particular type of control structure. In practice, as few as zero clusters for a control structure type may be identified (e.g., if there are zero code instances identified for the control structure type). In some examples, hundreds, or even thousands, of clusters may be identified for a given type of control structure.

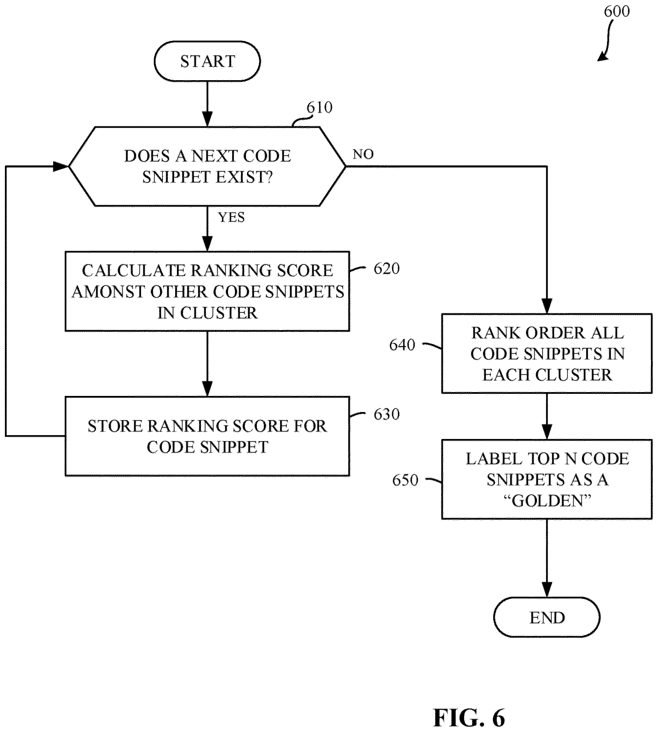

Once all control structure instances are type-assigned (i.e., placed in their appropriate buckets), and clusters within those types of control structures are identified, the example snippet ranker 360 performs a ranking analysis to identify one or more "golden" snippets. (Block 460). An example approach for ranking code snippets to identify one or more "golden" snippets is described below in further detail in connection with FIG. 6. As used herein, a "golden" snippet (which may also be referred to as a reference snippet, a clean snippet, a bug-free snippet, etc.) is a code snippet that has been identified as being bug-free. Such identification may be the result of an automated analysis and/or a manual identification of a code snippet being bug-free. Conversely, a snippet that is not referred to as a "golden" snippet may represent bug-free code (e.g., has not yet been identified as being bug-free) or alternatively, may include a bug. The code snippets are then stored in control structure database 350 the by the snippet ranker 360 along with the identification of whether the snippet is considered a "golden" snippet. (Block 470). As a result of the process of FIG. 4, software can later be analyzed to identify deviations from those "golden" snippets, which may be represent potential bugs. The example process of FIG. 4 then terminates, but may be repeated to, for example, identify semantics and "golden" snippets for another programming language, re-identify semantics and "golden" snippets the programming language identified at block 410, use a different instruction repository, etc.

FIG. 5 is a flowchart representative of example machine readable instructions 500 which may be executed to implement the example defect detector of FIG. 3. In particular, the instructions of FIG. 5 enable the defect detector to identify and generate clusters per control structure type. The example process 500 of the illustrated example of FIG. 5 begins when the example cluster generator identifies a control structure for processing. (Block 510). In an initial iteration, the example cluster generator identifies a first control structure. If a control structure is identified (e.g., block 510 returns a result of YES), the example cluster generator generates clusters, based on a clustering analysis of the code instances within the control structure and the pair-wise similarity scores identified in block 448 of FIG. 4. (Block 520). Each code instance within the code structure is assigned a unique cluster identifier within the generated clusters. (Block 530). Control proceeds to block 510, where the example process is repeated for each of the control structures. The example process 500 of FIG. 5 terminates when no further control structures exist (e.g., block 510 returns a result of NO).

FIG. 6 is a flowchart representative of example machine readable instructions 600 which may be executed to implement the example defect detector of FIG. 3. In particular, the instructions of FIG. 6 enable the defect detector to rank code snippets as a "golden" snippet. Once all semantics clusters for each control type bucket, each cluster is sent through a pairwise natural language processing similarity and a pairwise code similarity ranking system. The code pairs with the largest overall NLP and code similarity ranks are then considered "golden" instances of each clustered group. The example process 600 of the illustrated example of FIG. 6 begins when the example snippet ranker 360 identifies a code snippet within the control structure data store. (Block 610). The example snippet ranker 360 calculates a ranking score based on a pairwise similarity analysis (e.g., a semantic analysis) and/or a natural language processing (NLP) analysis (e.g., a syntactic analysis). (Block 620). In examples disclosed herein, the pairwise similarity analysis and/or NLP analysis is performed in the context of the other code snippets within the same cluster. In examples disclosed herein, the ranking score is generated using, for example, a harmonic mean of the scores of the similarity analysis and NLP analysis. However, any other approach for generating a ranking score may additionally or alternatively be used. The example snippet ranker 360 stores the ranking score in association with the code snippet. (Block 630).

Control proceeds to block 610, where ranking scores are generated for each code snippet. Upon generation of the ranking scores (e.g., upon block 610 returning a result of NO), the example snippet ranker 360 rank orders the code snippets within each cluster. (Block 640). Within each cluster, the example snippet ranker 360 labels the top N ranked code snippets as a "golden" snippet. (Block 650). While in the illustrated example of FIG. 6, a fixed number of code snippets are labeled as "golden", any other approach to selecting code snippets to be labeled as "golden" may additionally or alternatively be used. For example, a top percentage of code snippets (e.g., the top 10% of snippets) may be identified as "golden", a threshold ranking score may be used to determine whether a code snippet should be considered "golden," etc. The example process 600 of FIG. 6 then terminates.

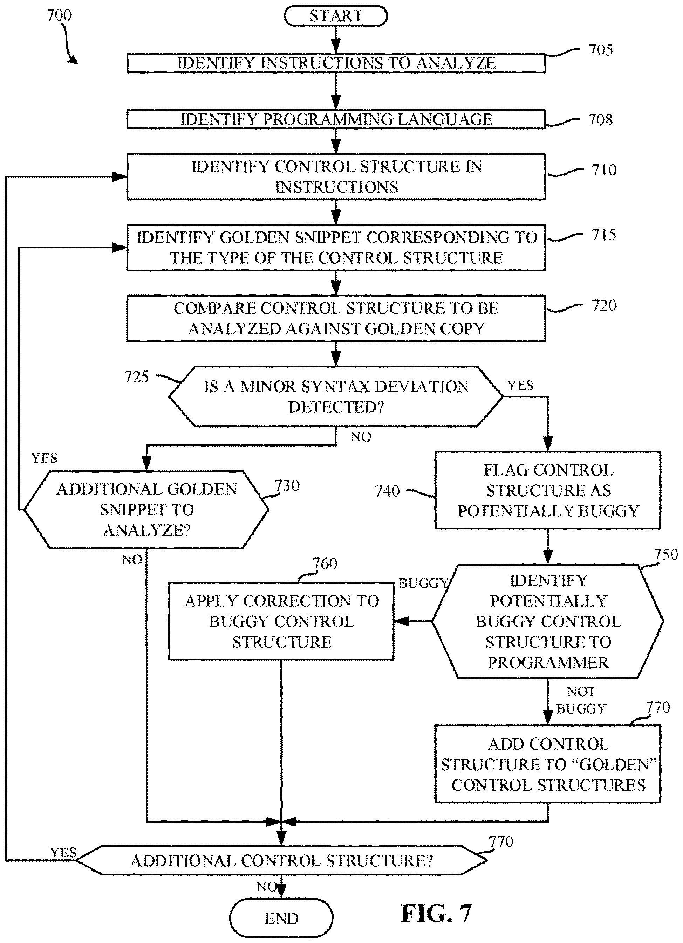

FIG. 7 is a flowchart representative of example machine readable instructions 700 which may be executed to implement the example defect detector of FIG. 3. In particular, the instructions of FIG. 7 enable the defect detector to identify a software defect. The example process 700 of FIG. 7 begins when the example instruction gatherer 335 identifies an instruction and/or set of instructions to analyze. (Block 705). In some examples, the instruction gatherer 335 may be implemented as a part of an integrated development environment (IDE), such that code analysis is performed on the fly (e.g., while a programmer is writing code). In such an example, the code analysis may be triggered by, for example, saving of the software, a threshold amount of time elapsing from a prior analysis, entry of an instruction to compile the software, an instruction from the programmer to perform the analysis, etc. Alternatively, the instruction gatherer 335 may be implemented as part of a cloud solution that, for example, periodically scans a repository to identify potential bugs.

The example programming language selector 325 identifies the programming language of the instructions to be analyzed. (Block 708). In examples disclosed herein, the programming language is identified based on a file extension associated with the instructions. However, other approaches for identifying a programming language may additionally or alternatively be used such as, for example, automatically analyzing the syntactic structures of the code snippet. Such an identification is useful as, for example, different programming language can have slightly varied, but similar, syntax. What may be a bug (e.g., resulting in unintended functionality) if written in one programming language, may result in intended functionality if written in another language. Thus, identification of the programming language in question, for selection of the corresponding control structure data store 350, is important for accurately identifying potential defects.

The example control structure miner 340 identifies a control structure within the instructions. (Block 710). In some examples, instructions to be analyzed may include multiple control structures for analysis. After having identified a control structure, the example control structure miner 340 identifies a type of the control structure. (Block 710). In examples disclosed herein, the type of the control structure is identified based on the control structure templates stored in the template repository 330 in association with the programming language of the instruction.

The example syntax comparator 365 identifies a golden snippet against which the control structure to analyze is to be compared. (Block 715). The example syntax comparator 365 compares the control structure to be analyzed against the golden snippet to determine a level of similarity. (Block 720). In examples disclosed herein, the similarity is determined by using a precise syntax code similarity mechanism, such as, for example, an abstract syntax tree. Such an analysis enables the example syntax comparator 365 to identify minor syntax deviations in a generally semantically similar grouping that may be the source of a bug. In examples disclosed herein, the similarity analysis performed by the syntax comparator 365 results in creation of a score representing a degree of similarity between the control structure to analyze and the golden snippet. In some examples, the score may identify the similarity with a score from zero (no similarity) to one (perfect similarity). However, any other approach to identifying a level of similarity may additionally or alternatively be used.

Using the similarity score, the example syntax comparator 365 determines whether there is a minor syntax deviation from the golden snippet to the control structure to be analyzed. (Block 725). Such a minor deviation can be detected when, for example, the similarity score meets or exceeds a lower threshold (e.g., .7, or 70% similarity), and does not meet or exceed an upper threshold (e.g., .99, or 99% similarity). Using the upper threshold ensures code snippets will be flagged as buggy when they do not perfectly match the golden snippet (e.g., indicating a potential bug). Using the lower threshold ensures that code snippets will not be flagged as buggy when there is no correspondence to the golden snippet. Of course, any other similarity threshold values may additionally or alternatively be used. Adjusting the similarity threshold values may serve to, for example, reduce false positive and/or false negative identifications of potentially buggy instructions.

If a minor syntax deviation is not detected (e.g., block 725 returns a result of NO), the example syntax comparator 365 determines whether there are any additional "golden" snippets to analyze. (Block 730). If there is an additional "golden" snippet to analyze (e.g., block 730 returns a result of YES), control returns to block 715, where the process of blocks 715 through 730 is repeated until either a minor syntax deviation is detected (e.g., block 725 returns a result of YES), or no additional "golden" snippets remain to be analyzed for the identified type of the control structure (e.g., block 730 returns a result of NO). If no additional "golden" snippet exists to analyze (e.g., block 730 returns a result of NO), the example process 700 of FIG. 7 terminates.

Returning to block 725, if the minor syntax deviation is detected (e.g., block 725 returns a result of YES), the example defect presenter 370 flags the control structure as potentially buggy. (Block 740). The potentially buggy control structure is presented to the programmer (e.g., a user), to enable the programmer to address the potentially buggy code. (Block 750). The identification of the potentially buggy code may be presented in different manners based on, for example, whether the defect detector 320 is implemented in, for example, an integrated development environment (IDE), a could repository analysis server, etc. In some examples, a pop-up message and/or other alert may be displayed to the programmer to identify the potential defect. In other examples, a message (e.g., an email message) may be communicated to the programmer to identify the defect. In some examples, a suggested correction may be proposed based on the identified golden snippet, to remediate the defect.

The programmer may, in response to the identification of the potential defect, select a correction to be applied to the buggy control structure (e.g., the correction based on the "golden" snippet). In such an example, the correction may be applied to the buggy control structure by the instruction gatherer 335. (Block 760). Alternatively, the programmer may indicate that the control structure is not buggy (e.g., that a false identification of a defect has occurred). The example snippet ranker 360 adds the control structure to the control structure data store 350 as a golden control structure. (Block 770). Adding the control structure to the control structure data store 350 enables future instances of similar instructions to not be labeled as potentially buggy or, alternatively, enables correction of such potentially buggy software). The example process 700 of FIG. 7 then terminates, but may be repeated periodically and/or a-periodically as software is developed and/or maintained to attempt to identify potential defects.

FIG. 8 is a block diagram of an example processor platform 8000 structured to execute the instructions of FIGS. 4, 5, 6, and/or 7 to implement the defect detector 320 of FIG. 3. The processor platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 800 of the illustrated example includes a processor 812. The processor 812 of the illustrated example is hardware. For example, the processor 812 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example programming language selector 325, the example instruction gatherer 335, the example control structure miner 340, the example cluster generator 345, the example snippet ranker 360, the example syntax comparator 365, and the example defect presenter 370.

The processor 812 of the illustrated example includes a local memory 813 (e.g., a cache). The processor 812 of the illustrated example is in communication with a main memory including a volatile memory 814 and a non-volatile memory 816 via a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAMR) and/or any other type of random access memory device. The non-volatile memory 816 may be implemented by flash memory and/or any other desired type of memory device. Access to the main memory 814, 816 is controlled by a memory controller.

The processor platform 800 of the illustrated example also includes an interface circuit 820. The interface circuit 820 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 822 are connected to the interface circuit 820. The input device(s) 822 permit(s) a user to enter data and/or commands into the processor 812. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 824 are also connected to the interface circuit 820 of the illustrated example. The output devices 824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 820 of the illustrated example, thus, typically includes a graphics driver card, a graphics driver chip and/or a graphics driver processor.

The interface circuit 820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 826. The communication can be via, for example, an Ethernet connection, a digital subscriber line (DSL) connection, a telephone line connection, a coaxial cable system, a satellite system, a line-of-site wireless system, a cellular telephone system, etc.

The processor platform 800 of the illustrated example also includes one or more mass storage devices 828 for storing software and/or data. Examples of such mass storage devices 828 include floppy disk drives, hard drive disks, compact disk drives, Blu-ray disk drives, redundant array of independent disks (RAID) systems, and digital versatile disk (DVD) drives.

The machine executable instructions 832 of FIGS. 4, 5, 6, and/or 7 may be stored in the mass storage device 828, in the volatile memory 814, in the non-volatile memory 816, and/or on a removable non-transitory computer readable storage medium such as a CD or DVD.

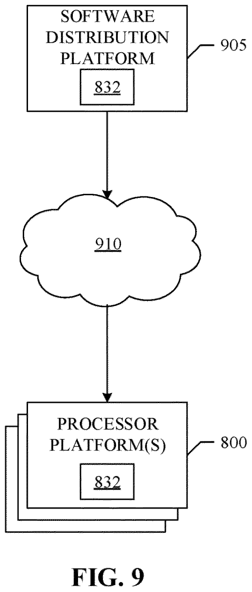

A block diagram illustrating an example software distribution platform 905 to distribute software such as the example computer readable instructions 832 of FIG. 8 to third parties is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 832 of FIG. 8. The third parties may be consumers, users, retailers, OEMs, etc., who purchase and/or license the software for use and/or re-sale and/or sub-licensing.

In the illustrated example, the software distribution platform 905 includes one or more servers and one or more storage devices. The storage devices store the computer readable instructions 832, which may correspond to the example computer readable instructions of FIGS. 4, 5, 6, and/or 7, as described above. The one or more servers of the example software distribution platform 905 are in communication with a network 910, which may correspond to any one or more of the Internet and/or any of the example networks 826 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 832 from the software distribution platform 905. For example, the software, which may correspond to the example computer readable instructions of FIGS. 4, 5, 6, and/or 7, may be downloaded to the example processor platform 800, which is to execute the computer readable instructions 832 to implement the defect detector 320 of FIG. 3. In some example, one or more servers of the software distribution platform 905 periodically offer, transmit, and/or force updates to the software (e.g., the example computer readable instructions 832 of FIG. 8) to ensure improvements, patches, updates, etc. are distributed and applied to the software at the end user devices.

From the foregoing, it will be appreciated that example methods, apparatus and articles of manufacture have been disclosed that enable automated detection of defects in software. Identification of such defects improves the efficiency of the software development process, enabling programmers to develop more efficient programs. The disclosed methods, apparatus and articles of manufacture improve the efficiency of using a computing device by suggesting the use of golden (e.g., bug-free) code snippets. Such use enables developers to write more efficient code. The disclosed methods, apparatus and articles of manufacture are accordingly directed to one or more improvement(s) in the functioning of a computer.

## Claims

1. A method (700) for detecting a defect in software, the method comprising:
identifying (705) a plurality of code snippets in an instruction repository (310), the code snippets to represent control structures, wherein a control structure indicates a set of instructions that control how a program is to be executed;
identifying (710) types of control structures of the code snippets;
generating a plurality of clusters of code snippets, the clusters of the code snippets corresponding to different types of control structures;
labeling (715) at least one code snippet of at least one of the clusters of the code snippets as at least one reference code snippet, wherein the at least one reference code snippet is a code snippet that has been identified as being bug-free; and
comparing (720) the at least one reference code snippet against a test code snippet to detect a defect in the test code snippet.

2. The method of claim 1, wherein the clusters of the at least one cluster represent corresponding variants of the type of control structure.

3. The method of claim 1, wherein the generating of the clusters is based at least one cluster is performed based on a pairwise similarity analysis.

4. The method of claim 1, wherein the labeling of the at least one code snippet as the reference code snippet is performed in response to a ranking based on a semantic analysis and a syntactic analysis.

5. The method of claim 1, further including:
identifying a control structure type of the code snippet to analyze;
comparing the test code snippet against the code snippets having the same type of control structure and that is labeled as the reference code snippet; and
identifying the defect when there is a minor deviation between the test code snippet and
at least one reference code snippet, wherein the minor deviation is detected when a similarity score between the test code snippet and at least one reference code snippet meets or exceeds a lower threshold and does not meet or exceed an upper threshold.

6. The method of any one of claims 1-5, further including causing presentation of the identification of the defect.

7. The method of claim 6, further including applying a proposed correction to the test code snippet to analyze based on the at least one reference code snippet.

8. An apparatus comprising means to perform a method as claimed in any preceding claim.

9. Machine-readable storage including machine-readable instructions, when executed, to implement a method as defined in claims 1-7.

## Patentansprüche

1. Verfahren (700) zum Detektieren eines Fehlers in Software, wobei das Verfahren Folgendes umfasst:
Identifizieren (705) mehrerer Codeabschnitte in einem Anweisungsspeicher (310), wobei die Codeabschnitte Steuerstrukturen darstellen sollen, wobei eine Steuerstruktur eine Gruppe von Anweisungen angibt, die steuern, wie ein Programm ausgeführt werden soll;
Identifizieren (710) von Arten von Steuerstrukturen der Codeabschnitte;
Erzeugen mehrerer Cluster von Codeabschnitten, wobei die Cluster der Codeabschnitte verschiedenen Arten von Steuerstrukturen entsprechen;
Bezeichnen (715) mindestens eines Codeabschnitts von mindestens einem der Cluster der Codeabschnitte als mindestens einen Referenzcodeabschnitt, wobei der mindestens eine Referenzcodeabschnitt ein Codeabschnitt ist, der als fehlerfrei identifiziert worden ist; und
Vergleichen (720) des mindestens einen Referenzcodeabschnitts mit einem Prüfcodeabschnitt, um einen Fehler im Prüfcodeabschnitt zu detektieren.

2. Verfahren nach Anspruch 1, wobei die Cluster des mindestens einen Clusters entsprechende Varianten der Art von Steuerstruktur darstellen.

3. Verfahren nach Anspruch 1, wobei das Erzeugen der Cluster mindestens einem Cluster beruht auf der Grundlage einer paarweisen Ähnlichkeitsanalyse durchgeführt wird.

4. Verfahren nach Anspruch 1, wobei das Bezeichnen des mindestens einen Codeabschnitts als den Referenzcodeabschnitt als Antwort auf eine Bewertung auf der Grundlage einer semantischen Analyse und einer syntaktischen Analyse durchgeführt wird.

5. Verfahren nach Anspruch 1, das ferner Folgendes enthält:
Identifizieren einer Steuerstrukturart des zu analysierenden Codeabschnitts;
Vergleichen des Prüfcodeabschnitts mit den Codeabschnitten, die dieselbe Art von Steuerstruktur aufweisen, und dem, der als der Referenzcodeabschnitt bezeichnet ist; und
Identifizieren des Fehlers, wenn es eine geringfügige Abweichung zwischen dem Prüfcodeabschnitt und mindestens einem Referenzcodeabschnitt gibt, wobei die geringfügige Abweichung detektiert wird, wenn eine Ähnlichkeitsbewertung zwischen dem Prüfcodeabschnitt und mindestens einem Referenzcodeabschnitt einen unteren Schwellenwert erreicht oder überschreitet und einen oberen Schwellenwert nicht erreicht oder überschreitet.

6. Verfahren nach einem der Ansprüche 1-5, das ferner das Bewirken einer Darstellung der Identifizierung des Fehlers enthält.

7. Verfahren nach Anspruch 6, das ferner das Anwenden einer vorgeschlagenen Korrektur auf den zu analysierenden Prüfcodeabschnitt auf der Grundlage des mindestens einen Referenzcodeabschnitts enthält.

8. Vorrichtung, die Mittel umfasst, um ein Verfahren nach einem der vorhergehenden Ansprüche durchzuführen.

9. Maschinenlesbarer Speicher, der maschinenlesbare Anweisungen enthält, die dann, wenn sie ausgeführt werden, ausgelegt sind, ein Verfahren nach den Ansprüchen 1-7 zu implementieren.

## Revendications

1. Procédé (700) de détection d'un défaut dans un logiciel, le procédé comportant les étapes consistant à :
identifier (705) une pluralité d'extraits de code dans un référentiel (310) d'instructions, les extraits de code servant à représenter des structures de contrôle, une structure de contrôle indiquant un ensemble d'instructions qui contrôlent la façon dont un programme doit être exécuté ;
identifier (710) des types de structures de contrôle des extraits de code ;
générer une pluralité de groupements d'extraits de code, les groupements des extraits de code correspondant à différents types de structures de contrôle ;
étiqueter (715) au moins un extrait de code d'au moins un des groupements des extraits de code en tant qu'au moins un extrait de code de référence, l'extrait ou les extraits de code de référence étant un extrait de code qui a été identifié comme étant exempt de bogues ; et
comparer (720) l'extrait ou les extraits de code de référence à un extrait de code en test pour détecter un défaut dans l'extrait de code en test.

2. Procédé selon la revendication 1, les groupements parmi le ou les groupements représentant des variantes correspondantes du type de structure de contrôle.

3. Procédé selon la revendication 1, la génération des groupements sur la base au moins un groupement est effectuée sur la base d'une analyse de similarité deux à deux.

4. Procédé selon la revendication 1, l'étiquetage de l'extrait ou des extraits de code en tant qu'extrait de code de référence étant effectué en réponse à un classement basé sur une analyse sémantique et une analyse syntaxique.

5. Procédé selon la revendication 1, comprenant en outre les étapes consistant à :
identifier un type de structure de contrôle de l'extrait de code à analyser ;
comparer l'extrait de code en test à l'extrait de code présentant le même type de structure de contrôle et qui est étiqueté en tant qu'extrait de code de référence ; et
identifier le défaut lorsqu'il existe un écart mineur entre l'extrait de code en test et au moins un extrait de code de référence, l'écart mineur étant détecté lorsqu'un score de similarité entre l'extrait de code en test et au moins un extrait de code de référence atteint ou dépasse un seuil inférieur et n'atteint pas ou ne dépasse pas un seuil supérieur.

6. Procédé selon l'une quelconque des revendications 1 à 5, comprenant en outre le fait de provoquer la présentation de l'identification du défaut.

7. Procédé selon la revendication 6, comprenant en outre l'application d'une correction proposée à l'extrait de code en test à analyser d'après l'extrait ou les extraits de code de référence.

8. Appareil comportant des moyens servant à réaliser un procédé selon l'une quelconque des revendications précédentes.

9. Stockage lisible par machine comprenant des instructions lisibles par machine servant, lorsqu'elles sont exécutées, à mettre en œuvre un procédé tel que défini dans les revendications 1 à 7.
